# EUROPÄISCHE PATENTANMELDUNG

(11) **EP 2 036 661 A1**
(43) Veröffentlichungstag der Anmeldung: **18.03.2009**
(21) Anmeldenummer: 07018193.8
(22) Anmeldetag: 17.09.2007
(51) Int. Cl.: B23Q 1/00, B23Q 3/18, B23Q 7/14

(54) **Verfahren und Vorrichtung zur Positionierung eines Werkzeugs oder Werkstücks**

(71) Anmelder: System 3R International AB, 162 26 Vällingby (SE)
(72) Erfinder: Roth, Walter, 9017 St. Gallen (CH)
(74) Vertreter: Weiss, Wolfgang

(57) **Zusammenfassung**

Es wird ein Verfahren zur Positionierung eines Werkzeugs oder Werkstücks mit einem Spannsystem vorgeschlagen, wobei das Spannsystem im Wesentlichen einen Zylinder (2) und einen zum Zylinder (2) passenden Kolben (3) aufweist, dadurch gekennzeichnet, dass zusätzlich zum Zylinder (2) und Kolben (3) jeweils einen Zentrierring (7,17) eingebracht wird.

## Beschreibung

Die Erfindung bezieht sich auf ein Verfahren zur Positionierung eines Werkzeugs oder Werkstücks mit einem Spannsystem, wobei das Spannsystem im Wesentlichen einen Zylinder und einen zum Zylinder passenden Kolben aufweist. Die Erfindung bezieht sich auch auf ein System zur Positionierung des Werkzeugs oder Werkstücks.

Im Werkzeugbau werden hochgenaue Spannsysteme mit einer Genauigkeit von wenigen Mikron eingesetzt. Diese Spannsysteme dienen dazu, Werkzeuge oder Werkstücke im Raum, der durch drei Koordinaten in der X-, Y- und Z-Richtung genau definiert ist, mit der höchst möglichen Genauigkeit und Wiederholbarkeit zu positionieren und spannen.

Aus der EP 1 268 123 ist ein gattungsgemässes Spannsystem bekannt. Eine Vorrichtung zum lösbaren Halten von Werkstücken oder Werkzeuge an eine Bearbeitungsmaschine besteht aus einer Aufspannplatte und einem Spannzapfen. Die Position des Werkzeugs oder Werkstücks, das mit diesem Spannsystem gespannt und gehalten wird, ist in der Richtung der Z-Achse, d.h. senkrecht zur X-Y-Ebene, genau und wiederholbar definiert. Lediglich die Drehung des Werkzeugs oder Werkstücks um die Z-Achse ist noch möglich. Um auch diesen Drehwinkel fest zulegen, sind mindestens zwei Spannsysteme erforderlich.

Ausgehend von diesem Stand der Technik ist es Aufgabe der Erfindung, ein Verfahren zur Positionierung eines Werkzeugs oder Werkstücks mit einem Spannsystems anzugeben, das auch bei einfacheren Spannsystemen, bei möglichst geringem Platzbedarf und mit möglichst wenig Materialaufwand eine ausreichende Genauigkeit und Wiederholbarkeit der Positionierung im dreidimensionalen Raum gewährleistet.

Diese Aufgabe wird gelöst durch ein Verfahren zur Positionierung eines Werkzeugs oder Werkstücks mit einem Spannsystem, wobei das Spannsystem im Wesentlichen einen Zylinder und einen zum Zylinder passenden Kolben aufweist, wobei zusätzlich zum Zylinder und zum Kolben jeweils einen Zentrierring eingebracht wird. Die Aufgabe wird auch gelöst durch ein System zur Positionierung des Werkzeugs oder des Werkstücks, wobei die Zentrierringe anpassbar an bestehende aktive und passive Spannelemente des Spannsystems ausgebildet sind.

Bevorzugte Weiterbildungen der Erfindung ergeben sich aus den abhängigen Ansprüchen.

Mit dem hier vorgeschlagenen Zentrierring kann ein modulares Spannsystem, das bisher nicht für die dreidimensionale Positionierung eines einzelnen Werkstückes oder Werkzeuges vorgesehen ist, nachträglich so aufgerüstet werden, dass keine Drehung des Werkzeugs oder Werkstücks um die Z-Achse mehr möglich ist.

Ein Ausführungsbeispiel der Erfindung wird anhand der Figuren beschrieben. Es zeigen:
Figur 1 eine perspektivische Sicht auf ein Spannfutter mit einem Zylinder zusammen mit einem ersten Zentrierring gemäss der Erfindung,
Figur 2 eine weitere Sicht auf das Spannfutter von Figur 1,
Figur 3 eine perspektivische Sicht auf dem Zentrierring aus Figur 1,
Figur 4a einen Schnitt durch den Zentrierring von Figur 3,
Figur 4b eine bereichsweise Vergrösserung aus Figur 4a,
Figur 5 eine perspektivische Sicht auf eine Spannplatte mit einem Kolben zusammen mit einem weiteren Zentrierring gemäss der Erfindung,
Figur 6 einen Schnitt durch die Spannplatte von Figur 5,
Figur 7 eine perspektivische Sicht auf den Zentrierring aus Figur 5,
Figur 8a einen Schnitt durch den Zentrierring aus Figur 7 und
Figur 8b eine bereichsweise Vergrösserung aus Figur 8a.

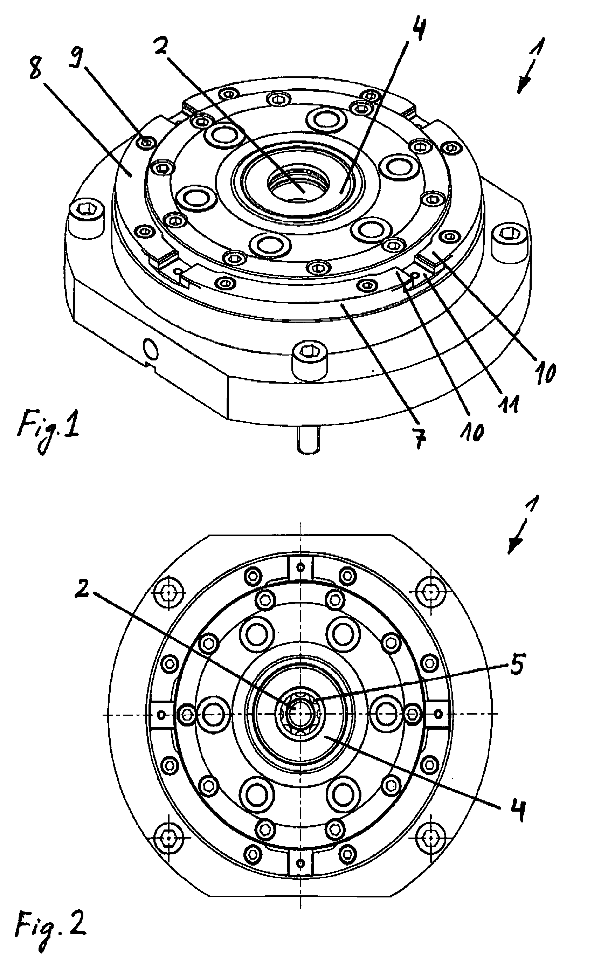

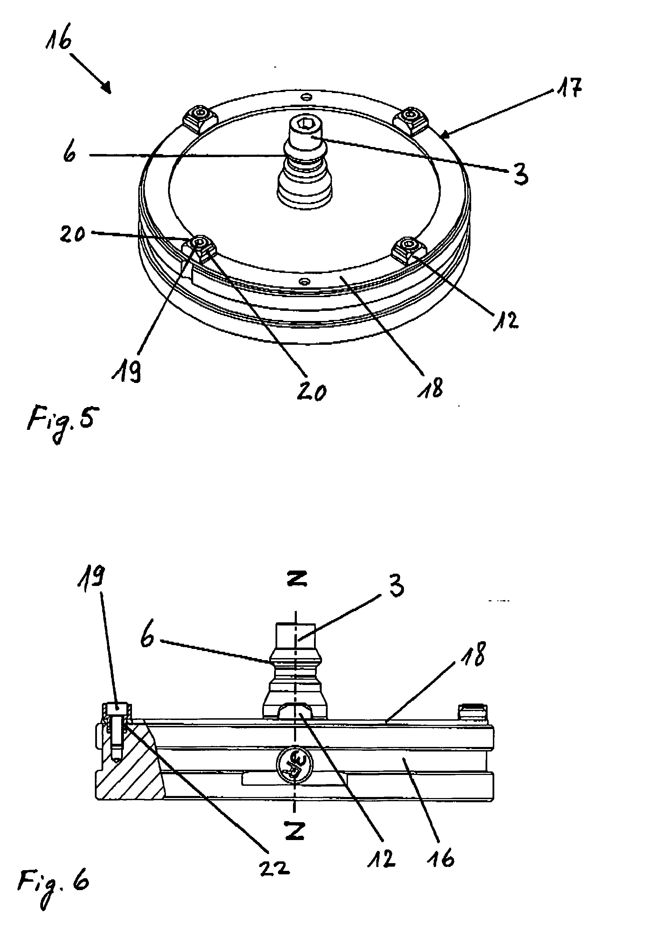

In Figur 1 und 2 ist ein so genanntes Aufbau- oder Spannfutter 1 mit einem Zylinder 2 zur Aufnahme eines Kolbens 3, der in Figuren 5 und 6 gezeigt und beschrieben wird, dargestellt. Um das Zentrum des runden Spannfutters 1 ist ein federnder ringförmiger Bereich 4 mit einem genau geschliffenen Durchmesser ersichtlich. Weiter unten im Zylinder 2 sind, wie ersichtlich in Figur 2, eine Anzahl Kugeln 5 auf einem Kreis um das Zentrum angeordnet. Die Kugeln 5 wirken zusammen mit einer besonders ausgebildeten Aussenfläche 6 am Kolben 3, die in Figuren 5 und 6 gezeigt wird. Die Kugeln 5 sind im Futter 1 so angeordnet, dass nur eine Bewegung in radialer Richtung möglich ist.

Am Aussenumfang des Spannfutters 1 ist ein erster Zentrierring 7 angeordnet. Der Zentrierring 7 besteht aus einem Stahlring 8 der mittels acht Schrauben 9 an eine Unterlage fest geschraubt werden kann. Der Stahlring 8 weist acht federnde Lippen 10 auf, die paarweise und im Abstand von 90° zu einander verteilt in der Oberfläche des Zentrierringes 7 ausgebildet sind. Die paarweise zusammen angeordneten Lippen 10 weisen konisch geschliffenen Flächen 21 auf. Hiermit wird eine genaue Positionierung und Klemmung für ein dazu passendes Gegenstück, ein Nocken 12, der in den Figuren 5, 6, 7 und 8 gezeigt und beschrieben wird, ermöglicht. Ohne den Zentrierring 7 könnte mit dem Spannfutter 1 lediglich die Positionierung in der Richtung der Z-Achse erreicht werden. Durch die Ausbildung des Zentrierringes 7 und durch die Anordnung am Aussenumfang des Spannfutters 1 kann zusätzlich eine Drehung um die Z-Achse verhindert werden. Der Zentrierring 7 braucht wenig zusätzlicher Platz und kann nachträglich am Aussenumfang des Spannfutters 1 befestigt werden. Hiermit wird erreicht, dass auch bei Anordnungen, die nur mit einem Spannfutter 1 aufgebaut sind, eine genaue Positionierung in dem dreidimensionalen Raum gewährleistet wird.

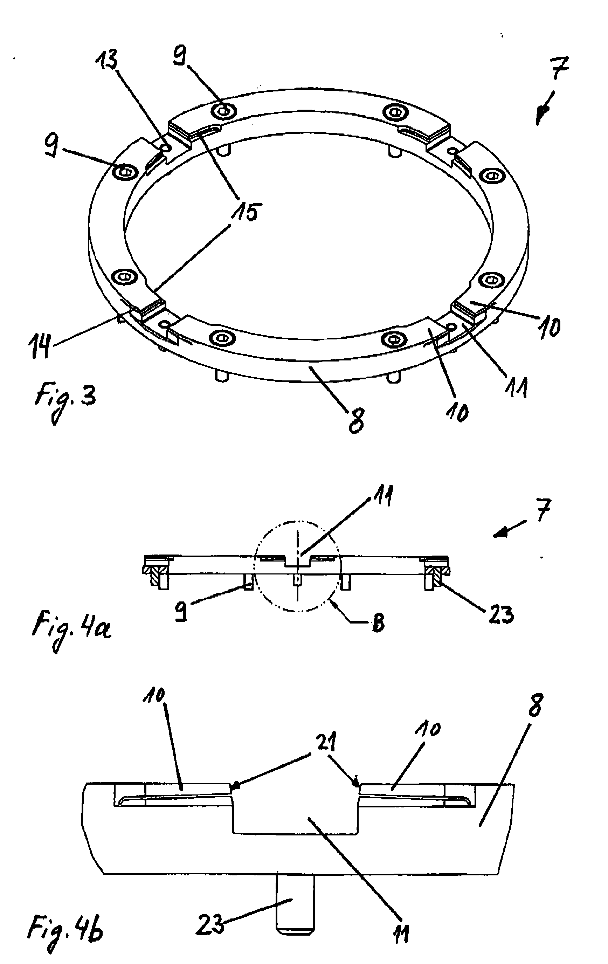

In Figur 3 ist der Zentrierring 7 für sich alleine perspektivisch und in Figur 4a ist der Zentrierring 7 geschnitten entlang der Mittellinie dargestellt. Figur 4b ist eine Ausschnittsvergrösserung aus Figur 4a. Die federnde Lippen 10 an den beiden Seiten der Aufnahme 11 sind konische ausgebildet. Am Boden der Aufnahme 11 ist eine Bohrung 13 mit einer genauen Passung zur Aufnahme eines Passstiftes 23 ersichtlich. Die federnde Lippen 10 sind nicht über die volle Breite des Zentrierringes 7 ausgebildet, sondern weisen auf der Innen- und Aussenseite des Zentrierringes 7 Ausnehmungen 14,15 auf. Hiermit wird eine genaue Einstellung der Federkraft im Bereich der federnden Lippen 10 möglich. Ausserdem wird hiermit eine seitliche Berührung der federnden Lippen 10 mit anderen Systemteilen ausgeschlossen.

In Figur 5 ist eine runde Spannplatte 16 mit einem Kolben 3 im Zentrum der Spannplatte 16 perspektivisch dargestellt. In Figur 6 ist die Spannplatte 16 geschnitten entlang der Mittellinie dargestellt. Am Rand der Spannplatte 16 ist ein zweiter Zentrierring 17, der komplementär zum ersten Zentrierring 7 ausgebildet ist, dargestellt. Am Kolben 3 ist die besonders ausgebildete Fläche 6 ersichtlich, die zusammen mit der radialen Bewegung der Kugeln 5 für eine genaue Positionierung und Halterung des Kolbens 3 in den Zylinder 2 des Spannfutters 1 entlang der Z-Achse des Spannsystems dient. Durch die Ausbildung von konischen Flächen 6 mit unterschiedlichem Winkel gegenüber der Z-Achse wird beim Einstecken des Kolbens 3 in dem Spannfutter 1 zuerst eine Zentrierung und anschliessend eine Selbsthemmung des Spannsystems erreicht. Anstelle der runden Spannplatte 16 kann als passives Spannelement auch ein einzelner Kolben 3 auf einer Spannplatte mit einer anderen Geometrie verwendet werden.

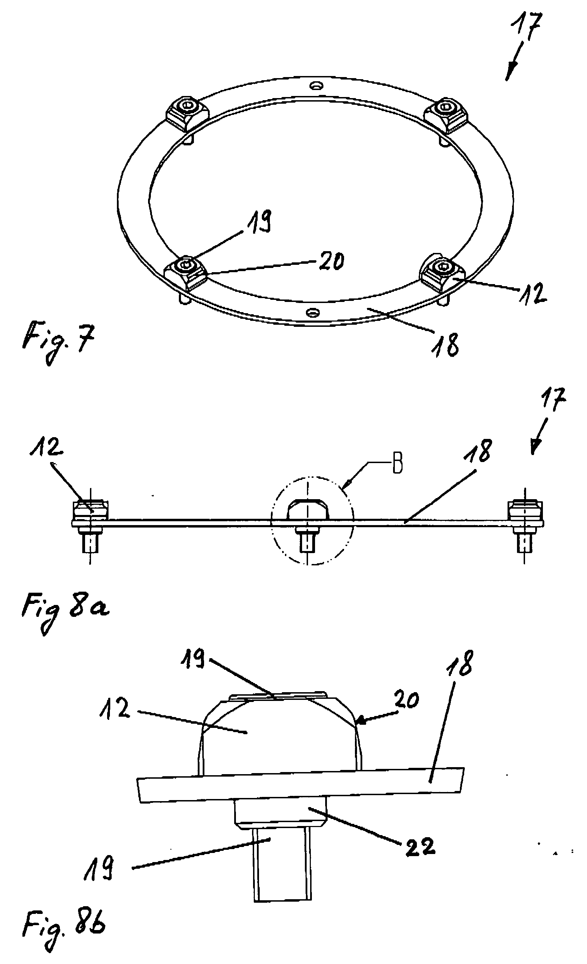

Der zweite Zentrierring 17, der in den Figuren 7, 8a und 8b für sich alleine dargestellt ist, besteht im Wesentlichen aus einem starren Stahlring 18 mit vier Nocken 12. Der Stahlring 18 ist im Bereich der Nocken 12 mit vier Schrauben 19 an die Spannplatte 16 fest geschraubt. Die Nocken 12 sind in einem Abstand vor 90° zu einander, d.h. rechtwinklig zueinander, angeordnet und weisen abgeschrägten Flächen 20 auf. Der Winkel der abgeschrägten Flächen 20 entspricht dem Winkel der abgeschrägten Flächen 21 an den federnden Lippen 10 des ersten Zentrierringes 7. Die schrägen Flächen 20 sind jeweils genau parallel zur X- und Y-Achse des Spannsystems ausgebildet. Der zweite Zentrierring 17 kann auch bei einer anderen Geometrie der Spannplatte 16 eingesetzt werden. Der Zentrierring 17 muss dann lediglich konzentrisch um die Z-Achse des Kolbens 3 angeordnet werden. Auf der Unterseite des Zentrierrings 17 ist in Figuren 8a und 8b ersichtlich, wie der Nocken 12 einen zylindrischen Bereich 22 aufweist. Dank dem zylindrischen Bereich 22 werden bei der Befestigung an die Spannplatte 16 eine genaue Passung und eine kraftschlüssige Verbindung mit der Spannplatte 16 erreicht.

Wenn das Spannfutter 1 und die Spannplatte 16 mit je einem ersten und zweiten Zentrierring 7,17 wie hier beschrieben ausgestattet werden, kann aus einem einfachen Spannsystem mit definierter Positionierung in der Richtung der Z-Achse nachträglich ein neues Spannsystem hergestellt werden, wobei eine Drehung des Werkzeugs oder des Werkstücks um die Z-Achse verhindert wird und eine genaue Positionierung im dreidimensionalen Raum ermöglicht wird.

## Patentansprüche

1. Verfahren zur Positionierung eines Werkzeugs oder Werkstücks mit einem Spannsystem, wobei das Spannsystem im Wesentlichen einen Zylinder (2) und einen zum Zylinder (2) passenden Kolben (3) aufweist, **dadurch gekennzeichnet, dass** zusätzlich zum Zylinder (2) und zum Kolben (3) jeweils einen Zentrierring (7,17) eingebracht wird.

2. Verfahren zur Positionierung eines Werkzeugs oder Werkstücks nach dem Anspruch 1, **dadurch gekennzeichnet, dass** ein erster Zentrierring (7) konzentrisch zum Zylinder (2) an einem Spannfutter (1) und ein zweiter Zentrierring (17) konzentrisch zum Kolben (3) an einer Spanplatte (16) befestigt werden, wobei der Zylinder (2) und der Kolben (3) als aktive bzw. passive Spannelemente eines Spannsystems zusammenwirken.

3. Verfahren zur Positionierung eines Werkzeugs oder Werkstücks nach mindestens einem der Ansprüche 1 oder 2, **dadurch gekennzeichnet, dass** der Zylinder (2) an einem runden Spannfutter (1) mit radial bewegbaren Kugeln (5) und mit einem federnden ringförmigen Bereich (4) angeordnet ist, und zur zentrierenden Aufnahme mit dem Kolben (3) zusammenwirkt, wobei der Kolben (3) an einer runden Spannplatte (16) angeordnet ist, und zur Z-Achse konisch verlaufende Flächen (6) zum Einspannen des Zylinders (2) aufweist.

4. System zur Positionierung eines Werkzeugs oder Werkstücks nach mindestens einem der Ansprüche 1 bis 3, **dadurch gekennzeichnet, dass** der erste Zentrierring (7) konzentrisch zum Zylinder (2) am Spannfutter (1) angeordnet ist.

5. System zur Positionierung eines Werkzeugs oder Werkstücks nach mindestens einem der Ansprüche 1 bis 3, **dadurch gekennzeichnet, dass** der zweite Zentrierring (17) konzentrisch zum Kolben (3) auf der Spannplatte (16) angeordnet ist.

6. System zur Positionierung eines Werkzeugs oder Werkstücks nach mindestens einem der Ansprüche 1 bis 5, **dadurch gekennzeichnet, dass** der erste Zentrierring (7) acht federnde Lippen (10) aufweist, die paarweise und rechtwinklig zueinander verteilt am Umfang des ersten Zentrierringes (7) ausgebildet sind.

7. System zur Positionierung eines Werkzeugs oder Werkstücks nach mindestens einem der Ansprüche 1 bis 6, **dadurch gekennzeichnet, dass** die paarweise angeordnete federnde Lippen (10) konisch geschliffene Flächen (21) aufweisen.

8. System zur Positionierung eines Werkzeugs oder Werkstücks nach mindestens einem der Ansprüche 1 bis 7, **dadurch gekennzeichnet, dass** der zweite Zentrierring (17) vier paarweise und rechtwinklig zu einander verteilt angeordnete Nocken (12) mit acht konisch geschliffenen Flächen (20) aufweist.

9. Verfahren zur Positionierung eines Werkzeugs oder Werkstücks nach mindestens einem der Ansprüche 1 bis 8, **dadurch gekennzeichnet, dass** die konisch geschliffenen Flächen (21) des ersten Zentrierringes (7) unter dem gleichen Winkel wie die konisch geschliffenen Flächen (20) des zweiten Zentrierringes (17) angeordnet sind.
